# EUROPÄISCHE PATENTANMELDUNG

(11) **EP 2 392 448 A2**
(43) Veröffentlichungstag der Anmeldung: **07.12.2011**
(21) Anmeldenummer: 11167013.9
(22) Anmeldetag: 23.05.2011
(51) Int. Cl.: B29C 51/12, F25D 23/06

(54) **Kältegerät und Fertigungsverfahren dafür**

(30) Priorität: 01.06.2010 DE 102010029583
(71) Anmelder: BSH Bosch und Siemens Hausgeräte GmbH, 81739 München (DE)
(72) Erfinder: Bailly, Frank, 89233, Neu-Ulm (DE); Mezaros, Alexandre Tavares, 89537, Giengen (DE); Patchala, Dasaradh Kumar, 89231, Neu-Ulm (DE); Stelzer, Jörg, 89537, Giengen (DE)

(57) **Zusammenfassung**

Beim Fertigen eines Kältegeräts, insbesondere eines Haushaltsgeräts, wird ein Innenbehälter (19) aus Flachmaterial (2) thermogeformt, und ein Verdampfer (14) wird an einer heißen Wand (27) des Innenbehälters (19) durch Hitzewirkung, insbesondere durch Schmelzen einer Schicht (23) aus thermoplastischem Kunststoff, befestigt.

## Beschreibung

Die vorliegende Erfindung betrifft ein Kältegerät, insbesondere ein Haushaltskältegerät, mit einem Innenbehälter und einem an dem Innenbehälter montierten Verdampfer sowie ein Verfahren zur Fertigung eines solchen Kältegeräts.

Herkömmlicherweise werden bei der Fertigung von Haushaltskältegeräten deren Innenbehälter durch Thermoformen, früher auch als Tiefziehen bezeichnet, von Flachmaterialzuschnitten aus thermoplastischem Kunststoff hergestellt. Der Verdampfer wird mit einem Klebemittel, meist einem zweiseitigen Klebeband, beschichtet, und der so vorbereitete Verdampfer wird gegen die Rückwand des fertigen Innenbehälters gedrückt. Wenn der ebene Verdampfer mit der gleichfalls ebenen Rückwand in Kontakt gebracht wird, besteht die Gefahr der Bildung von Lufteinschlüssen zwischen Rückwand und Verdampfer, die die Wärmeübertragung vom Innenbehälter zum Verdampfer erheblich beeinträchtigen. Solche Lufteinschlüsse können nicht auf wirtschaftliche Weise beseitigt werden. Das eine Vielzahl von Einzelschritten umfassende Fertigungsverfahren ist zeitaufwendig und kostspielig.

Aufgabe der vorliegenden Erfindung ist, ein effizientes und preiswertes Fertigungsverfahren für ein Kältegerät hoher Qualität zu schaffen und ein Kältegerät anzugeben, bei dem die Gefahr von Lufteinschlüssen zwischen einer Innenbehälterwand und einem Verdampfer idealerweise beseitigt, zumindest aber erheblich reduziert ist.

Die Aufgabe wird zum einen gelöst, indem bei einem Verfahren zum Fertigen eines Kältegeräts mit den Schritten
- Thermoformen eines Innenbehälters aus Flachmaterial;
- Anbringen eines Verdampfers an einer Wand des Innenbehälters;
- Befestigen des Verdampfers an der Wand des Innenbehälters durch Hitzewirkung.

Das Thermoformen des Innenbehälters und das Anbringen des Verdampfers können in aufeinander folgenden Fertigungsschritten erfolgen. In diesem Fall ist eine schnelle und energiesparende Fertigung insbesondere dann möglich, wenn der beim Thermoformen erhitzte Innenbehälter zum Zeitpunkt des Anbringens des Verdampfers allenfalls unvollständig wieder abgekühlt ist, so dass die Befestigung des Verdampfers an der Wand des Innenbehälters durch die noch vom Thermoformen her vorhandene Hitze erfolgen kann.

Zweckmäßigerweise ist dann die Temperatur des Innenbehälters beim Anbringen des Verdampfers niedriger als beim Thermoformen, so dass die Gefahr einer signifikanten nachträglichen Verformung des Innenbehälters durch das Anbringen des Verdampfers vermieden wird.

Einer zweiten Ausgestaltung des Verfahrens zufolge ist eine besonders schnelle und effiziente Fertigung möglich, indem der Innenbehälter durch das Thermoformen selbst mit dem Verdampfer in Kontakt gebracht wird.

Herkömmlicherweise umfasst das Thermoformen einen Schritt des Verformens des Flachmaterials durch Einwirkung einer hydrostatischen Druckdifferenz auf verschiedenen Seiten des Flachmaterials. Zweckmäßigerweise wird durch die in diesem Schritt stattfindende Verformung das Flachmaterial mit dem Verdampfer in Kontakt gebracht. Ein besonderer Vorteil dieses Ansatzes ist, dass, wenn sich das Flachmaterial unter dem Einfluss der hydrostatischen Druckdifferenz frei, ohne Kontakt mit einem seine Bewegung einschränkenden Formwerkzeug, verformt, zunächst eine gleichmäßig gekrümmte Kontur entsteht, die mit dem Verdampfer zunächst punktuell in Kontakt tritt. Wenn nach diesem ersten Kontakt das Verformen fortgesetzt wird, dehnt sich die Kontaktzone zwischen dem Flachmaterial und dem Verdampfer ausgehend vom ersten Kontaktpunkt kontinuierlich in radialer Richtung aus, wobei Luft aus dem Zwischenraum zwischen Verdampfer und Flachmaterial kontinuierlich zu den Seiten verdrängt wird. Da es keine bereits verklebten Bereiche gibt, die dieser Luft den Weg versperren könnten, besteht keine Gefahr der Bildung von Lufteinschlüssen.

Um dem verformten Flachmaterial seine endgültige Gestalt zu geben, ist es an sich bekannt, einen Stempel, der diese Form vorgibt, in einen an dem Flachmaterial geformten Hohlraum einzuführen. Zweckmäßigerweise werden dabei der Verdampfer und eine den Hohlraum begrenzende Wand des Flachmaterials zwischen dem Stempel und einem Verdampferträger zusammengepresst, um eine innige Verbindung zwischen der Wand und dem Verdampfer herzustellen.

Um eine Klebebefestigung des Verdampfers am Innenbehälter zu vermitteln, kann ein hitzeaktivierbarer Klebstoff zwischen beiden angebracht sein. Eine Schweißbefestigung kann durch eine vorab am Verdampfer angebrachte Folie vermittelt werden, die wenigstens oberflächlich aus einem thermoplastischen Kunststoff besteht.

Dieser Kunststoff kann ausgewählt sein unter EVA (Ethylenvinylacetat), PS (Polystyrol), insbesondere schlagzähes Polystyrol (HIPS), SAN (Styrol-Acrylnitril), ABS (AcrylnitrilButadien-Styrol), PE (Polyethylen), PP (Polypropylen), PA (Polyamid), PET (Polyethylenterephthalat). Besonders bevorzugt ist eine Folie aus PS, da sich diese besonders gut mit dem häufig für den Innenbehälter verwendeten HIPS oder ABS verbindet. Vorteilhaft ist auch EVA, da das Material mit unterschiedlichen Schmelztemperaturen auf dem Markt ist und daher die Möglichkeit besteht, eine Materialqualität zu wählen, die bei den ohnehin im Fertigungsprozess auftretenden Temperaturen anschmilzt, anstatt aufwendige Maßnahmen treffen zu müssen, um die zum Schmelzen der Folie erforderliche Temperatur einzustellen.

Die Aufgabe wird ferner gelöst durch ein Kältegerät mit einem Innenbehälter und einem an einer Wand des Innenbehälters durch Hitzewirkung befestigten Verdampfer.

Zwischen dem Innenbehälter und dem Verdampfer kann ein durch die Hitzewirkung aktivierbarer Klebstoff oder eine Schicht aus einem thermplastischen Kunststoff vorgesehen sein.

Die Hitzeeinwirkung kann dabei über gesondert vorgesehene Wärmequellen oder durch die Wärme des thermogeformten Innenbehälters bereitgestellt sein. Auch eine Kombination der beiden Wärmequellen ist denkbar.

Um einen ideal innigen Kontakt zwischen dem Innenbehälter und dem Verdampfer herzustellen, kann es zweckmäßig sein, dass der Innenbehälter wenigstens oberflächlich aus demselben Kunststoff wie die Schicht besteht, so dass durch die Hitzewirkung diese Schicht mit dem Kunststoff des Innenbehälters verschmilzt. Dies ist insbesondere dann zweckmäßig, wenn der Verdampfer am Innenbehälter während des Thermoformens befestigt wird, d.h. zu einer Zeit, wo der Innenbehälter ohnehin eine Temperatur hat, bei der er plastisch verformbar ist.

Es kann auch zweckmäßig sein, dass die Schicht einen niedrigeren Schmelzpunkt als der Innenbehälter hat. Dies ist insbesondere dann sinnvoll, wenn der Verdampfer am Innenbehälter erst im Anschluss an das Thermoformen des Innenbehälters angebracht wird und eine neuerliche Verformung des Innenbehälters bei der Anbringung des Verdampfers vermieden werden soll. In diesem Fall wird der mit einer Kunststofffolie ausgestattete Verdampfer durch Kunststoff-Schweißen mit dem Innenbehälter verbunden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht einer Thermoformvorrichtung in einem ersten Stadium des erfindungsgemäßen Fertigungsverfahrens;
- Fig. 2: eine Ansicht der Thermoformvorrichtung in einem zweiten Stadium des Verfahrens;
- Fig. 3: eine Ansicht der Thermoformvorrichtung in einem dritten Stadium des Verfahrens;
- Fig. 4: die Thermoformvorrichtung in einem vierten Stadium des Verfahrens;
- Fig. 5: einen Ausschnitt eines Verdampfers und eines Innenbehälters zwischen den Stadien der Figuren 1 und 2;
- Fig. 6: eine zu Fig. 5 analoge Ansicht in einem weiteren Zwischenstadium;
- Fig. 7: eine zu Fig. 5 und 6 analoge Ansicht im Stadium der Fig. 2;
- Fig. 8: einen Ausschnitt des Innenbehälters und des Verdampfers in einem ersten Stadium eines Verfahrens gemäß einer zweiten Ausgestaltung der Erfindung;
- Fig. 9: den Innenbehälter und den Verdampfer der Fig. 8 in einem zweiten Stadium des Verfahrens; und
- Fig. 10: den Verdampfer und den Innenbehälter in einem dritten Stadium des Verfahrens.

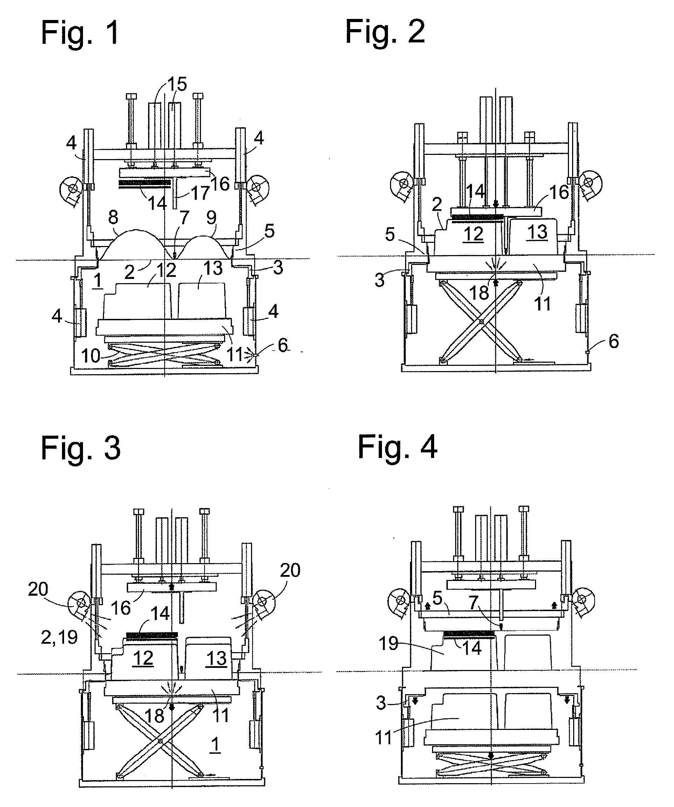

Fig. 1 zeigt eine schematische Ansicht einer zur Fertigung eines Innenbehälters für ein Haushaltskältegerät verwendeten Thermoformvorrichtung. Ein Eine Druckkammer 1 ist an ihrer Oberseite durch einen rechteckigen Flachmaterial-Zuschnitt 2 aus thermoplastischem Kunststoff wie etwa PS verschlossen, indem die Ränder des Zuschnitts 2 zwischen zwei mit Hilfe von Stellgliedern 4 vertikal bewegbaren Rahmen 3, 5 geklemmt sind. Der Zuschnitt 2 ist auf eine Temperatur nahe seinem Schmelzpunkt vorgeheizt, so dass er sich unter dem Einfluss von an einem Druckanschluss 6 in die Druckkammer 1 eingespeister Druckluft wie in der Fig. dargestellt plastisch verformt. Eine sich quer zur Zeichnungsebene erstreckende Strebe 7 des oberen Rahmens 5 stützt den Zuschnitt 2 lokal gegen den von unten einwirkenden Überdruck ab, so dass sich unter dessen Einfluss zwei kontinuierlich gewölbte Schalen 8, 9 beiderseits der Strebe 7 ausbilden, die nach Abschluss der Umformung des Zuschnitts 2 zum Innenbehälter jeweils einzelne Lagerkammern des Innenbehälters bilden werden.

Anstelle der Druckkammer 1 könnte, um eine gleichartige Verformung des Zuschnitts zu erreichen, auch eine durch den Zuschnitt nach unten abgeschlossene Vakuumkammer vorgesehen sein.

Im Innern der Druckkammer 1 ist auf einem Scherentisch 10 höhenverstellbar ein Stempel 11 mit zwei Vorsprüngen 12, 13 angeordnet, deren Gestalt jeweils komplementär zu den an dem Zuschnitt 2 zu formenden Lagerkammern ist.

In einem oberen Teil der Thermoformvorrichtung ist ein Verdampfer 14 an einem mit Hilfe von Stellgliedern 15 vertikal bewegbaren Verdampferträger 16 angeordnet. Eine Platte 17 springt vom Verdampferträger 16 vertikal nach unten in Richtung der Strebe 7 vor.

In dem in Fig. 2 gezeigten Fertigungsstadium ist der Stempel 11 von unten und der Verdampferträger 16 von oben gegen den Zuschnitt 2 gefahren. Die Vorsprünge 12, 13 haben die Ebene, in der die Ränder des Zuschnitts zwischen den Rahmen 3, 5 geklemmt sind, nach oben passiert, und ein Rand des Stempels 11 liegt dicht an der Unterseite des unteren Rahmens 3 an. Dadurch ist der Zuschnitt 2 vom Druckanschluss 6 abgeschnitten. Die zwischen dem Stempel 11 und dem Zuschnitt 2 eingeschlossene Luft wird über einen Anschluss 18 des Stempels 11 abgesaugt, so dass sich der Zuschnitt 2 dicht an den Stempel 11 anschmiegt, so dass er in der Fig. 2 von den Konturen der Vorsprünge 12, 13 nicht mehr zu unterscheiden ist.

Der Verdampferträger 16 hält den Verdampfer 14 gegen den Zuschnitt 2 und eine Oberseite des Vorsprungs 12 gedrückt.

Der Verdampfer 14 ist von einem beliebigen an sich bekannten Typ mit einer flachen Oberfläche, zum Beispiel vom Roll-Bond- oder Tube-on-sheet Typ. Auf die vom Verdampferträger 16 dem Zuschnitt 2 zugewandt gehaltene flache Oberfläche des Verdampfers 14 ist eine Folie auflaminiert, die aus dem gleichen Kunststoff wie der Zuschnitt 2 besteht und daher mit diesem verschmilzt, wenn sie vom Verdampferträger 16 gegen den heißen Zuschnitt 2 gepresst wird.

Nachdem der Verdampferträger 16 den Verdampfer 14 freigegeben hat, wird er wieder nach oben verfahren, wie in Fig. 3 gezeigt, und Ventilatoren 20 werden in Gang gesetzt, um den nunmehr fertig zum Innenbehälter 19 umgeformten Zuschnitt 2 zu kühlen. Der Anschluss 18 des Stempels 11 wird mit Druckluft beaufschlagt, so dass diese zwischen die Vorsprünge 12, 13 und den Innenbehälter 19 eindringt und der Stempel 11 sich wie in Fig. 3 dargestellt vom Innenbehälter 19 lösen und wieder abwärts verfahren werden kann. Nach Rückkehr des Stempels 11 in seine Ausgangsstellung können auch die Rahmen 3, 5 auseinander verfahren werden, wie in Fig. 4 gezeigt, um den fertigen Innenbehälter 19 freizugeben.

Es ist zwar denkbar, beim Übergang vom Stadium der Fig. 1 zu dem der Fig. 2 zunächst durch Luftabsaugen am Anschluss 18 den Innenbehälter in seine endgültige Form zu bringen und anschließend den Verdampfer 14 zu platzieren und anzudrücken. Bevorzugt ist jedoch eine gleichzeitige Bewegung des Stempels 11 und des Verdampferträgers 16 auf den Zuschnitt 2 zu. Zum einen verhindert die Platte 17, wenn sie rechtzeitig die Strebe 7 des Rahmens 3 berührt, dass die zwei sich unter dem Einfluss der Druckluft ausdehnenden Schalen 8, 9 sich oberhalb der Strebe 7 berühren und ihre Wände miteinander verschmelzen können. Zum anderen kann die Wölbung der Schalen 8, 9 genutzt werden, um einen großflächigen und von Lufteinschlüssen freien Kontakt zwischen der späteren Rückwand des Innenbehälters 19 und dem Verdampfer 14 zu garantieren, wie im Folgenden deutlich wird.

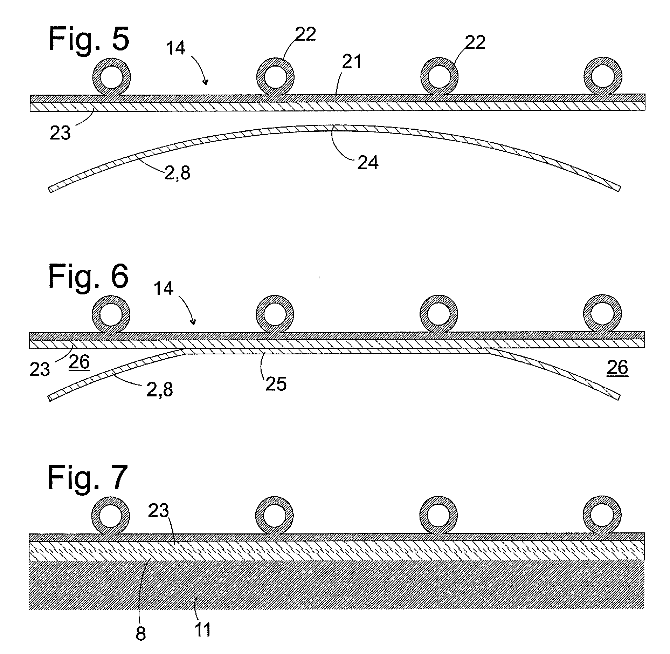

Fig. 5 zeigt jeweils einen Ausschnitt der Schale 8 sowie des Verdampfers 14, hier vom Typ Tube-on-sheet mit einer metallischen Grundplatte 21, einem über eine Oberseite der Grundplatte 21 verlaufenden Kältemittelrohr 22 und einer auf die Unterseite der Grundplatte 21 laminierten PS-Folie 23. Ein Scheitelpunkt 24 der Schale 8 steht kurz davor, die Folie 23 zu berühren.

Fig. 6 zeigt den Verdampfer 14 und die Schale 8 zu einem geringfügig späteren Zeitpunkt, in dem sich die Folie 23 und die Schale 8 einander, sei es durch fortgesetzte Abwärtsbewegung des Verdampfers 14 oder fortgesetzte Druckluftzufuhr zur Druckkammer 1, weiter angenähert haben und einander auf einer ausgedehnten Kontaktfläche 25 berühren. Die Kontaktfläche 25 wächst an ihren Rändern kontinuierlich in radialer Richtung nach außen, wobei die Luft aus dem verbleibenden Zwischenraum 26 kontinuierlich radial nach außen entweicht. Wenn schließlich, wie in Fig. 7 gezeigt, die Folie 23 und die Schale 8 sich vollflächig berühren und zwischen dem Verdampfer 14 und dem Stempel 11 aneinander gepresst werden, erhitzt sich die Folie 23 auf die Temperatur der Schale 8, und beide verschmelzen innig miteinander.

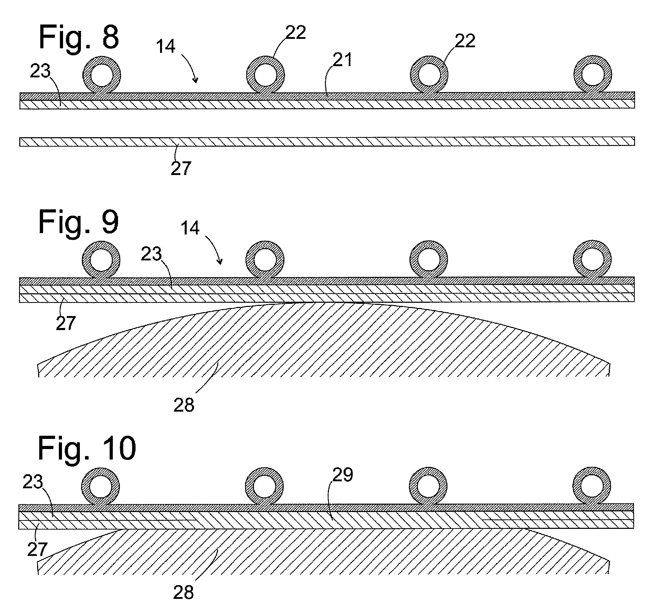

Eine zweite Ausgestaltung des erfindungsgemäßen Fertigungsverfahrens wird anhand der Figuren 8 bis 10 erläutert. Der Verdampfer 14 unterscheidet sich nicht von demjenigen der mit Bezug auf Figuren 1 bis 7 beschriebenen ersten Ausgestaltung. Die in der Figur gezeigte Rückwand 27 gehört zu einem bereits fertig geformten Innenbehälter. Dieser Innenbehälter kann zum Beispiel mit einer Thermoformvorrichtung erhalten sein, die sich von der in den Figuren 1 bis 4 gezeigten im Wesentlichen nur dadurch unterscheidet, dass in ihr nicht vorab bereits der Verdampfer 14 montiert ist. Dieser Innenbehälter wird in der Thermoformvorrichtung so weit abgekühlt wie zum Entformen erforderlich und in noch heißem Zustand zu einer Transferstation gebracht, wo die Montage des Verdampfers 14 erfolgt. Die Transferstation weist einen flexiblen Stempel 28 auf, der wie in Fig. 9 gezeigt, von innen gegen die die Folie 23 des Verdampfers 14 berührende Rückwand 27 gefahren wird. Die Folie 23 besteht aus einem niedrig schmelzenden Kunststoff, insbesondere aus EVA, der bei der Temperatur schmilzt, mit der der Innenbehälter die Transferstation erreicht, oder durch eine geringe zusätzliche Wärmezufuhr, beispielsweise mit Hilfe des Stempels 28, zum Schmelzen gebracht werden kann, ohne dass der Innenbehälter wieder weich wird.

Während in der Fig. 9 der Stempel 28 die Rückwand 27 im Wesentlichen drucklos und punktuell berührt, nimmt mit fortschreitender Aufwärtsbewegung des Stempels 28 dessen Druck zu, und gleichzeitig dehnt sich die Kontaktfläche zwischen Rückwand 27 und Stempel 28 immer weiter in radialer Richtung aus. Luft, die sich möglicherweise noch zwischen der Folie 23 und der Rückwand 27 befinden kann, wenn beide miteinander in Kontakt gebracht werden, wird auf diese Weise kontinuierlich zwischen der Folie 23 und der Rückwand 27 in radialer Richtung herausgedrängt, und eine Zone 29, in der die Folie 23 mit der Rückwand 27 verschmolzen bzw. verschweißt ist, wächst in entsprechender Weise kontinuierlich vom Punkt des ersten Kontaktes bis zu den Rändern des Verdampfers 14.

Diese zweite Ausgestaltung des Verfahrens ist zwar etwas aufwändiger als die erste, indem sie zusätzlich zur Thermoformvorrichtung die Transferstation vorsieht; sie hat jedoch den Vorteil einer geringeren Empfindlichkeit gegen eine eventuelle Schrumpfung des Innenbehälters 19 beim Abkühlen. Da eine solche Schrumpfung erst ab Unterschreitung der Schmelztemperatur der Folie 23 zum Aufbau von Spannungen zwischen Innenbehälter und Verdampfer führen kann, sind die Spannungen im Falle der niedrig schmelzenden EVA-Folie 23 geringer als bei der PS-Folie 23 der ersten Ausgestaltung.

## Patentansprüche

1. Verfahren zum Fertigen eines Kältegeräts, insbesondere eines Haushaltsgeräts, mit den Schritten
- Thermoformen eines Innenbehälters (19) aus Flachmaterial (2);
- Anbringen eines Verdampfers (14) an einer Wand (8, 27) des Innenbehälters (19);
**dadurch gekennzeichnet, dass**
- der Verdampfer (14) an der Wand (8, 27) des Innenbehälters (19) durch Hitzewirkung befestigt wird.

2. Verfahren nach Anspruch 1, **dadurch gekennzeichnet, dass** das Thermoformen des Innenbehälters (19) und das Anbringen des Verdampfers (14) in aufeinanderfolgenden Schritten erfolgen.

3. Verfahren nach Anspruch 2, **dadurch gekennzeichnet, dass** der beim Thermoformen erhitzte Innenbehälter (19) zum Zeitpunkt des Anbringens des Verdampfers (14) allenfalls unvollständig wieder abgekühlt ist.

4. Verfahren nach Anspruch 2 oder 3, **dadurch gekennzeichnet, dass** die Temperatur des Innenbehälters (19) beim Anbringen des Verdampfers (14) niedriger ist als beim Thermoformen.

5. Verfahren nach Anspruch 1, **dadurch gekennzeichnet, dass** der Innenbehälter (19) durch das Thermoformen mit dem Verdampfer (14) in Kontakt gebracht wird.

6. Verfahren nach Anspruch 5, **dadurch gekennzeichnet, dass** das Thermoformen einen Schritt des Verformens des Flachmaterials (2) durch Einwirkung einer hydrostatischen Druckdifferenz umfasst und dass das Flachmaterial (2) in diesem Schritt des Verformens mit dem Verdampfer (14) in Kontakt tritt.

7. Verfahren nach Anspruch 5 oder 6, **dadurch gekennzeichnet, dass** das Thermoformen einen Schritt des Einführens eines Stempels (11) in einen an dem Flachmaterial (2) geformten Hohlraum umfasst und dass der Verdampfer (14) und eine den Hohlraum begrenzende Wand (8) des Flachmaterials (2) zwischen dem Stempel (11) und einem Verdampferträger (16) zusammengepresst werden.

8. Verfahren nach einem der vorhergehenden Ansprüche, **dadurch gekennzeichnet, dass** beim Anbringen des Verdampfers (14) eine Zone (25, 29), in der Verdampfer (14) und Innenbehälter (19) gegeneinander gedrückt werden, kontinuierlich in radialer Richtung ausgeweitet wird.

9. Verfahren nach einem der vorhergehenden Ansprüche, **dadurch gekennzeichnet, dass** die Befestigung des Verdampfers (14) an der Wand (8; 27) durch einen hitzeaktivierbaren Klebstoff bewirkt wird.

10. Verfahren nach einem der Ansprüche 1 bis 8, **dadurch gekennzeichnet, dass** die Befestigung des Verdampfers (14) an der Wand (8; 27) durch eine vorab am Verdampfer (14) angebrachte Folie (23) bewirkt wird, die wenigstens oberflächlich aus thermoplastischem Kunststoff besteht.

11. Verfahren nach Anspruch 10, **dadurch gekennzeichnet, dass** der thermoplastische Kunststoff unter EVA, PS, HIPS, SAN, ABS, PE, PP, PA oder PET, vorzugsweise unter PS und EVA, ausgewählt ist.

12. Kältegerät mit einem Innenbehälter (19) und einem an einer Wand (8; 27) des Innenbehälters (19) angebrachten Verdampfer (14), **dadurch gekennzeichnet, dass** der Verdampfer (14) an der Wand (8; 27) durch Hitzewirkung befestigt ist.

13. Kältegerät nach Anspruch 12, **dadurch gekennzeichnet, dass** der Verdampfer (14) an der Wand (8; 27) über eine Schicht (23) aus thermoplastischem Kunststoff, vorzugsweise ausgewählt unter EVA, PS, HIPS, SAN, ABS, PE, PP, PA und PET, befestigt ist.

14. Kältegerät nach Anspruch 13, **dadurch gekennzeichnet, dass** der Innenbehälter (19) wenigstens oberflächlich aus demselben Kunststoff wie die Schicht (23) besteht.

15. Kältegerät nach Anspruch 13, **dadurch gekennzeichnet, dass** die Schicht (23) einen niedrigeren Schmelzpunkt als der Innenbehälter (19) hat.
